(19) Europäisches Patentamt

European Patent Office

Office européen des brevets

(11) EP 1 055 128 B1

(12) EUROPÄISCHE PATENTSCHRIFT

(45) Veröffentlichungstag und Bekanntmachung des Hinweises auf die Patenterteilung:
26.09.2001 Patentblatt 2001/39

(21) Anmeldenummer: 99913106.3

(22) Anmeldetag: 04.03.1999

(51) Int Cl.⁷: $G01R\ 19/165$, $G01R\ 31/40$

(86) Internationale Anmeldenummer:
PCT/DE99/00574

(87) Internationale Veröffentlichungsnummer:
WO 99/51992 (14.10.1999 Gazette 1999/41)

(54) **SPANNUNGS-ÜBERWACHUNGSEINRICHTUNG FÜR ZWEI UNTERSCHIEDLICHE VERSORGUNGSSPANNUNGEN EINES ELEKTRONISCHEN GERÄTS**

VOLTAGE-MONITORING DEVICE FOR TWO DIFFERENT SUPPLY VOLTAGES OF AN ELECTRONIC APPARATUS

DISPOSITIF DE SURVEILLANCE DE LA TENSION POUR DEUX TENSIONS D'ALIMENTATION DIFFERENTES D'UN APPAREIL ELECTRONIQUE

(84) Benannte Vertragsstaaten:
FR GB

(30) Priorität: 01.04.1998 DE 19814696

(43) Veröffentlichungstag der Anmeldung:
29.11.2000 Patentblatt 2000/48

(73) Patentinhaber: SIEMENS AKTIENGESELLSCHAFT
80333 München (DE)

(72) Erfinder:
• BOLZ, Stephan
D-87657 Görisried (DE)
• FISCH, Alfons
D-93167 Falkenstein (DE)

(56) Entgegenhaltungen:
US-A- 4 300 063     US-A- 5 254 971
US-A- 5 438 270

• NEGELE G: "The ratiometric function of the series AN 2500 digital panel meter" MESSEN & ZAEHLEN REGISTRIEREN, SEPT. 1973, WEST GERMANY, Nr. 1, Seiten 12, 22-24, XP002109012 ISSN: 0343-6470

**Beschreibung**

Die Erfindung betrifft eine Spannungs-Überwachungseinrichtung für zwei unterschiedliche Versorgungsspannungen eines elektronischen Geräts nach dem Oberbegriff von Anspruch 1.

Die benötigten Versorgungsspannungen beispielsweise eines Mikrocontrollers werden üblicherweise mittels integrierter Spannungsregler aus einer Betriebsspannung erzeugt.

Aus DE 36 12237 A1 ist eine Anordnung zur Überwachung von Spannungen bekannt, die über einen Multiplexer einem Analog-Digital-Wandler zugeführt und in einem Mikroprozessor mit gespeicherten Grenzwerten verglichen werden. Das Vergleichsergebnis wird in einer Anzeigevorrichtung angezeigt.

Aus DE-Z "DESIGN&ELEKTRONIK", Ausgabe 5 vom 01.03.1988, Seiten 13 und 16 ist ein Spannungsüberwachungs-IC bekannt, welches ein Resetsignal auslöst, wenn die zu überwachende Spannung unter einen bestimmten Spannungswert fällt.

Integrierte Spannungsregler sind in der Regel mit einem integrierten Spannungsüberwacher - bestehend aus einem Analog-Digital-Wandler und einem Komparator - ausgerüstet und geben ein Resetsignal aus, wenn ihre Ausgangsspannung, eine Versorgungsspannung des elektronischen Geräts, außerhalb eines definierten Spannungsbereichs liegt.

Durch die Integration der Spannungsüberwacher auf dem jeweiligen Spannungsregler ist eine lineare Unabhängigkeit von Ausgangsspannung und Spannungsüberwachung jedes Spannungsreglers und der Ausgangsspannungen beider Spannungsregler untereinander nicht gewährleistet, da Ausgangsspannungserzeugung und Spannungsüberwachung eines Spannungsreglers dieselbe Referenzspannung benutzen bzw. beide Regler unterschiedliche Referenzspannungen erzeugen können. Ein Fehler infolge einer unzulässig hohen Drift der Referenzspannung eines Spannungsreglers ist wegen der gemeinsamen Verwendung für Spannungserzeugung und -überwachung nicht zu erkennen.

Aufgabe der Erfindung ist es, eine Spannungs-Überwachungseinrichtung für zwei unterschiedliche Versorgungsspannungen eines elektronischen Geräts, insbesondere die Versorgungsspannungen eines Mikrocontrollers, zu schaffen, bei der eine lineare Unabhängigkeit von Ausgangsspannung und Spannungsüberwachung eines Spannungsreglers und der Ausgangsspannungen beider Spannungsregler untereinander gewährleistet ist.

Diese Aufgabe wird erfindungsgemäß durch die Merkmale des Anspruchs 1 gelöst.

Ein Ausführungsbeispiel nach der Erfindung ist im folgenden unter Bezugnahme auf die schematische Zeichnung anhand der Spannungsversorgung eines Mikrocontrollers einer Kraftfahrzeug-Motorsteuerung mit zwei unterschiedlichen Versorgungsspannungen näher erläutert.

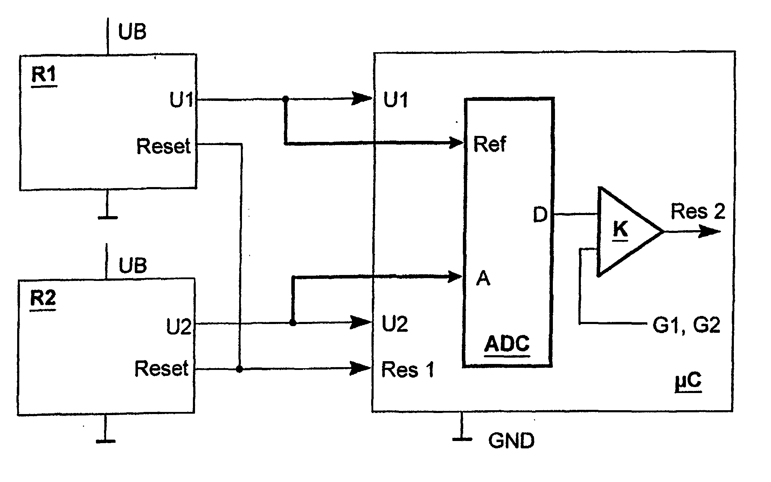

In der einzigen Figur ist ein Mikrocontroller µC schematisch als Kasten dargestellt, welcher Anschlüsse für zwei Versorgungsspannungen U1, U2 (beispielsweise U1 = 5V, U2 = 3.3V) und ein Bezugspotential GND aufweist. Die Versorgungsspannungen U1, U2 werden üblicherweise mittels bekannter, integrierter Spannungsregler R1, R2 aus einer Betriebsspannung UB (beispielsweise 12V) gewonnen, die größer als eine der beiden Versorgungsspannungen U1, U2 sein muß.

Auf jedem Spannungsregler R1, R2 ist ein nicht dargestellter Spannungsüberwacher integriert, der ein Resetsignal ausgibt, wenn die Ausgangsspannung - die Versorgungsspannung - einen definierten Spannungsbereich, beispielsweise U1, U2 ± 10%, verläßt. Die Resetausgänge beider Spannungsregler R1, R2 sind, in nicht dargestellter Weise gegeneinander entkoppelt, mit einem Reseteingang Res1 des Mikrocontrollers µC verbunden. Durch ein Resetsignal wird der Mikrocontroller in einen sicheren Zustand gebracht (z. B. abgeschaltet).

Die vorstehend beschriebene Schaltung entspricht der bekannten, üblichen Erzeugung zweier unterschiedlicher Spannungen.

Um eine lineare Unabhängigkeit von Ausgangsspannung und Spannungsüberwachung jedes Spannungsreglers für sich und der Ausgangsspannungen beider Spannungsregler untereinander zu gewährleisten, ist erfindungsgemäß (in der Zeichnung fett hervorgehoben) ein weiterer, ratiometrisch arbeitender Analog-Digital-Wandler ADC vorgesehen.

Der besondere Vorteil bei der Überwachung der beiden Versorgungsspannungen U1, U2 des Mikrocontrollers µC (auf beispielsweise U1, U2 ± 5%) ist, daß auf diesem bereits wenigstens ein ratiometrisch arbeitender Analog-Digital-Wandler integriert ist.

Dessen Referenzeingang Ref wird die höhere der beiden Ausgangsspannungen (in diesem Fall U1 des Spannungsreglers R1) als Referenzspannung zugeführt, während die niedrigere Ausgangsspannung U2 des Reglers R2 dem analogen Meßeingang A zugeführt wird.

Ein ratiometrisch arbeitender Analog-Digital-Wandler bildet das Verhältnis der analogen Eingangsspannung U2 zur Referenzspannung U1, also U2/U1 in seinem Wertebereich von z.B. $2^{10}-1 = 1023$ Schritten digital ab: der am Ausgang des Analog-Digital-Wandlers ADC erscheinende Digitalwert D des analogen Eingangswertes U2, bezogen auf den Wertebereich von 1.023 Schritten

$$D = U2/U1 = 1023 * \frac{3.3}{5} = 675 \text{ Schritte.}$$

Der Digitalwert D wird in einem nachfolgenden Fensterkomparator K, welcher im Mikrocontroller µC softwaremäßig dargestellt werden kann, mit vorgegebenen Grenzwerten G1, G2 (beispielsweise G1 = 675 + 34 = 709 bzw. G2 = 675 - 34 = 641, entsprechend einem Verhältnis U2/U1 = $\frac{3.3}{5} \pm 5\%$) verglichen.

Es wird also das Verhältnis U2/U1 daraufhin überwacht, ob es innerhalb des für den Mikrocontroller μC zulässigen Bereichs liegt. Dabei wird angenommen, daß die Wahrscheinlichkeit für ein gleichzeitiges Driften beider Spannungen in die gleiche Richtung vernachlässigbar klein ist (Potenzierung nicht korrelierter Wahrscheinlichkeiten).

Verläßt das Verhältnis der beiden Spannungen den vordefinierten Bereich (D > G1 oder D < G2), so erscheint am Ausgang des Fensterkomparators ein Resetsignal Res2, wodurch der Mikrocontroller μC, wie durch das Resetsignal Res1, in einen sicheren Zustand gebracht wird.

Da die Versorgungsspannung U2 innerhalb des Meßbereichs von U1 des Analog-Digital-Wandlers ADC liegt, wird kein Spannungsteiler benötigt, welcher, bedingt durch die Toleranz der Bauelemente, die Meßgenauigkeit reduzieren würde.

Die einzige Fehlerquelle der erfindungsgemäßen Spannungs-Überwachungseinrichtung ist die Meßgenauigkeit des Analog-Digital-Wandlers ADC, die bei einer Auflösung von 10 Bit einen typischen Wert von 0.1% aufweist.

Im vorliegenden Ausführungsbeispiel einer Spannungs-Überwachungseinrichtung werden nicht nur die Versorgungsspannungen, d.h., die Ausgangsspannungen der beiden Spannungsregler für sich, sondern wird auch deren Verhältnis überwacht, wodurch nicht nur die lineare Unabhängigkeit beider Spannungsüberwachungen erreicht wird, sondern auch ein engerer Toleranzbereich als derjenige der beiden Spannungsregler R1, R2 definiert werden kann; im Falle der Überwachung eines Mikrocontrollers ohne zusätzlich erforderliche Hardware-Komponenten.

**Patentansprüche**

1. Spannungs-Überwachungseinrichtung für zwei unterschiedliche Versorgungsspannungen (U1, U2) eines elektronischen Geräts, wobei jede Versorgungsspannung (U1, U2) aus einer Betriebsspannung (UB) mittels eines integrierten Spannungsreglers (R1, R2) erzeugt und mittels eines im Spannungsregler befindlichen Spannungsüberwachers mittels eines Analog-Digital-Wandlers und eines Fensterkomparators überwacht wird, wobei der Spannungsregler (R1, R2) ein Resetsignal (Res1) an das elektronische Gerät ausgibt, um es in einen sicheren Zustand zu bringen, wenn die überwachte Versorgungsspannung einen definierten Toleranzbereich verläßt,
**dadurch gekennzeichnet**,

- daß ein weiterer, ratiometrisch arbeitender Analog-Digital-Wandler (ADC) vorgesehen ist, dessen Referenzeingang (Ref) die größere Versorgungsspannung (U1), und dessen Meßeingang (A) die kleinere Versorgungsspannung (U2) zugeführt wird, und

- daß ein weiterer Fensterkomparator (K) vorgesehen ist, welchem der am Ausgang des weiteren Analog-Digital-Wandlers (ADC) erscheinende Digitalwert (D) zugeführt wird, in welchem er mit vorgegebenen Grenzwerten (G1, G2) verglichen wird, und wobei der weitere Fensterkomparator (K) ein weiteres Resetsignal (Res2) erzeugt, wenn der Digitalwert (D) den größeren Grenzwert (G1) überschreitet oder den kleineren Grenzwert (G2) unterschreitet.

2. Spannungs-Überwachungseinrichtung nach Anspruch 1, **dadurch gekennzeichnet,**
**daß** das elektronische Gerät ein Mikrocontroller (μC) ist, auf welchem der weitere Analog-Digital-Wandler (ADC) integriert ist, und in welchem der weitere Fensterkomparator (K) softwaremäßig dargestellt ist.

**Claims**

1. Voltage-monitoring device for two different supply voltages (U1, U2) of an electronic apparatus, where each supply voltage (U1, U2) is produced from an operating voltage (UB) by means of an integrated voltage regulator (R1, R2), and is monitored by means of a voltage monitor located in the voltage regulator using an analogue-digital converter and a window comparator, where the voltage regulator (R1, R2) emits a reset signal (Res1) to the electronic apparatus in order to place it in a safe state if the monitored supply voltage varies from a defined tolerance range,
**characterised in that**

- there is an additional analogue-digital converter (ADC) which operates ratiometrically, to whose reference input (Ref) the higher supply voltage (U1) is fed, and to whose measuring input (A) the smaller supply voltage (U2) is fed, and

- there is an additional window comparator (K), to which the digital value (D) which appears at the output of the additional analogue-digital converter (ADC) is fed, in which it is compared with predefined limits (G1, G2), and where the additional window comparator (K) generates an additional reset signal (Res2) if the digital value (D) exceeds the higher limit (G1) or falls below the lower limit (G2).

2. Voltage monitoring device as in Claim 1, **character-**

**ised in that** the electronic apparatus is a microcontroller (μC), into which the additional analogue-digital converter (ADC) is integrated, and in which the additional window comparator (K) is represented by software.

## Revendications

1. Dispositif de surveillance de la tension pour deux tensions d'alimentation différentes (U1, U2) d'un appareil électronique, chaque tension d'alimentation (U1, U2) étant produite à 'partir d'une tension de fonctionnement (UB) au moyen d'un régulateur de tension (R1, R2) intégré, et étant surveillée au moyen d'un dispositif de surveillance de tension situé dans le régulateur de tension, au moyen d'un convertisseur analogique-numérique et d'un comparateur à fenêtre, le régulateur de tension (R1, R2) fournissant à l'appareil électronique un signal de remise à l'état initial (Res1) pour mettre cet appareil en position de sécurité, quand la tension de sortie surveillée quitte une zone de tolérance définie, caractérisé

   - en ce qu'il est prévu un autre convertisseur analogique-numérique (ADC), travaillant de façon ratiométrique, dont l'entrée de référence (Ref) est alimentée par la tension d'alimentation la plus grande (U1), et dont l'entrée de mesure (A) est alimentée par la tension d'alimentation la plus petite (U2), et
   - en ce qu'il est prévu un autre comparateur à fenêtre (K) auquel est envoyée la valeur numérique (D) apparaissant à la sortie de l'autre convertisseur analogique-numérique (ADC), et dans lequel la valeur numérique (D) est comparée à des valeurs limites prédéfinies (G1, G2), et cet autre comparateur à fenêtre (K) produisant un autre signal de remise à l'état initial (Res2) quand la valeur numérique (D) est supérieure à la valeur limite (G1) la plus grande, ou quand elle est inférieure à la valeur limite (G2) la plus petite.

2. Dispositif de surveillance de la tension suivant la revendication 1, **caractérisé en ce que** l'appareil électronique est un microcontrôleur (μC), dans lequel est intégré l'autre convertisseur analogique-numérique (ADC) et dans lequel l'autre comparateur à fenêtre (K) est représenté par un logiciel.

UB

**R1**

U1

Reset

U1

Ref

D

**K**

Res 2

UB

**R2**

U2

A

U2

**ADC**

Res 1

G1, G2

**µC**

GND